# DEMANDE DE BREVET EUROPEEN

(11) **EP 1 172 151 A1**
(43) Date de publication de la demande: **16.01.2002**
(21) Numéro de dépôt: 01401579.6
(22) Date de dépôt: 15.06.2001
(51) Int. Cl.: B05B 11/00, G01F 11/26, G01F 11/02

(54) **Dispositif pour le conditionnement et la distribution dosée d'un produit liquide**

(30) Priorité: 12.07.2000 FR 0009109
(71) Demandeur: L'OREAL, 75008 Paris (FR)
(72) Inventeur: Lacout, Frank, 91210 Draveil (FR)
(74) Mandataire: Boulard, Denis

(57) **Abrégé**

La présente demande concerne un dispositif (1) pour la distribution dosée d'un produit liquide, comprenant un récipient (2) comportant une ouverture (11) dans laquelle est monté un élément de rétention (20) délimitant une cavité doseuse (27) dont le contenu est destiné à être distribué au moyen d'une pompe (30) équipant le dispositif, ledit élément de rétention (20) comprenant un premier passage (24) et un second passage (28, 29) disposé entre l'ouverture (11) du récipient et le premier passage (24), lesdits premier et second passages étant destinés à être mis en communication avec le produit, par retournement au moins partiel du récipient (2), des moyens (30-32) étant prévus pour lors du passage du dispositif (1) depuis la position retournée vers la position de distribution, canaliser tout ou partie du produit entrant dans ledit élément de rétention (20) via le second passage, vers ladite cavité doseuse (27).

## Description

La présente invention a trait à un dispositif pour le conditionnement et la distribution dosée d'un produit, notamment cosmétique ou de soin, tel que pouvant être utilisé par exemple pour le maquillage, le soin ou l'hygiène de la peau ou du cheveu. Une telle distribution dosée peut être recherchée, notamment pour des produits tels qu'utilisés par exemple pour le soin ou la repousse des cheveux.

Le dispositif visé par la présente invention est du type comprenant un organe de rétention délimitant une cavité doseuse, à remplir notamment par retournement total ou partiel du dispositif, le dispositif étant équipé d'une pompe assurant la distribution du produit contenu dans la cavité doseuse. La distribution du produit au moyen de la pompe se fait en position tête en haut du dispositif, c'est à dire dans une position où la pompe est située au dessus de la surface libre du liquide dans le récipient contenant le produit à distribuer.

Du brevet EP 0 626 321, il est connu un ensemble équipé d'une pompe alimentée sans tube plongeur depuis un organe de rétention comportant un fond et une paroi latérale, de diamètre extérieur inférieur au diamètre intérieur du col du récipient. L'organe de rétention comporte en outre autour de l'extrémité supérieure de sa paroi latérale des pattes souples s'évasant vers le col du récipient selon une direction faisant un angle avec la verticale, pour assurer le remplissage de l'organe de rétention.

Dans la pratique, il s'avère qu'un tel dispositif ne permet pas d'assurer un bon remplissage de l'organe de rétention, et notamment lorsque l'on arrive en fin d'utilisation du contenu du dispositif. En effet, on observe une variation importante du degré de remplissage de l'organe de rétention, en fonction de la façon dont on déplace le récipient, depuis sa position retournée de façon totale ou, partielle, vers sa position de distribution, c'est à dire tête en haut.

Aussi, est-ce un des objets de l'invention que de fournir un ensemble pour le conditionnement et la distribution dosée d'un produit liquide, et remédiant en tout ou partie aux inconvénients des dispositifs décrits ci-dessus.

C'est en particulier un objet de l'invention que de fournir un dispositif du type précité, et qui autorise une meilleur reproductibilité du niveau de remplissage de la cavité doseuse, et ce, jusqu'à sensiblement la dernière utilisation du dispositif.

C'est un autre objet de l'invention que de fournir un dispositif du type précité dont le degré de remplissage de la cavité doseuse est indépendant de la gestuelle mise en oeuvre pour provoque le remplissage de ladite cavité doseuse.

C'est encore un autre objet de l'invention que de fournir un tel dispositif qui soit simple et fiable d'utilisation et qui soit économique à réaliser.

D'autres objets encore apparaîtront dans la description détaillée qui suit.

Selon l'invention, ces objets sont atteints en réalisant un dispositif pour le conditionnement et la distribution dosée d'un produit liquide comprenant un récipient comportant une ouverture dans laquelle est monté un élément de rétention délimitant une cavité doseuse dont le contenu est destiné à être distribué en position tête en haut du dispositif, au moyen d'une pompe équipant le dispositif, ledit élément de rétention comprenant ou délimitant au moins un premier passage dont la position axiale délimite le volume maximal de la cavité doseuse, et au moins un second passage disposé à une hauteur axiale intermédiaire entre l'ouverture du récipient et le premier passage, lesdits premier et second passages étant destinés à être mis en communication avec le produit par retournement au moins partiel du récipient, des moyens étant prévus pour lors du passage du dispositif depuis la position retournée vers la position de distribution, canaliser tout ou partie du produit entrant dans ledit élément de rétention via le second passage, vers ladite cavité doseuse.

Le (ou les) second(s) passage(s) est (sont ) à une position axiale différente de la position axiale du (ou des) premier(s) passage(s). De préférence, le (ou les) second(s) passage(s) est (sont ) aussi proche(s) que possible de l'ouverture du récipient.

Ainsi, les moyens de canalisation, formés à l'intérieur de l'élément de rétention canalisent la quasi totalité du produit entrant dans ledit élément de rétention via le ou les seconds passages, et ce, quelle que soit la gestuelle de retournement du dispositif, et en particulier, la vitesse d'exécution du mouvement de retournement. Cette caractéristique se distingue de la configuration du brevet mentionné ci-avant dans lequel une partie non négligeable du produit se trouvant sur les pattes souples ne retombe pas forcément dans la cavité doseuse.

De préférence, lesdits moyens de canalisation délimitent au moins en partie au moins un canal longitudinal, sensiblement fermé au moins sur sa longueur comprise entre le (ou les) second(s) passage(s) et la cavité doseuse. Le terme sensiblement fermé traduit le fait que l'essentiel du produit se trouvant dans un canal est acheminé dans la cavité doseuse.

Avantageusement, la fermeture ou quasi fermeture longitudinale du (ou des) canal (canaux) résulte de la coopération du corps de ladite pompe avec lesdits moyens de canalisation.

Selon un mode de réalisation préférentiel, ledit second passage est sensiblement au niveau de ladite ouverture du récipient. Cette configuration optimise la quantité de produit pouvant être récupéré lors du retournement du récipient, et pouvant être canalisé dans la cavité doseuse.

Selon un mode de réalisation particulier, ledit élément de rétention est constitué d'un élément tubulaire dont un fond est fermé et dont une extrémité ouverte est montée sur un bord du récipient délimitant ladite ouverture.

De préférence, ledit (ou lesdits) premier(s) passage(s) est (sont) à position angulaire distincte de la position angulaire dudit (ou desdits) second(s) passage(s). Ainsi, tout le produit canalisé depuis le ou les seconds passages retombe dans la cavité doseuse, sans pouvoir s'échapper en partie au travers du ou des premiers passages.

A titre d'exemple de réalisation spécifique, l'élément de rétention délimite deux premier passages disposés à l'opposé l'un de l'autre, et deux second passages disposés à l'opposé l'un de l'autre, et décalés à 90° par rapport auxdits premier passages.

Les moyens de canalisation peuvent être constitués d'au moins une nervure formée sur une surface intérieure de l'élément de rétention, et s'étendant axialement sensiblement depuis le (ou les) second(s) passage(s), au moins jusqu'à la cavité doseuse.

De préférence, ladite (lesdites) nervure(s) s'étendent sensiblement jusqu'au fond de la cavité doseuse. Une telle conception permet de pouvoir démouler facilement la pièce lorsque celle-ci est obtenue de moulage.

De préférence encore, le dispositif comprend au moins deux nervures, configurées de manière à délimiter avec la pompe au moins un canal sensiblement fermé sur sa longueur, au moins entre le, (ou les) second(s) passage(s), avec chacun desquels au moins un canal communique, et la cavité doseuse dans laquelle il (ils) débouche(nt).

Selon un mode de réalisation spécifique, ledit élément de rétention est de forme cylindrique de révolution, ladite (lesdites) nervure(s) étant orientées radialement audit élément de rétention.

De préférence, lesdites nervures sont de largeur radiale variable de manière à suivre sensiblement le profil de la pompe sur sa hauteur comprise entre le (ou les) second(s) passage(s) et ladite cavité doseuse, assurant ainsi la fermeture ou quasi fermeture longitudinale du ou des canaux sur toute leur longueur.

Selon un mode de réalisation préférentiel, la pompe est solidaire d'un tube plongeur dont une extrémité est située sensiblement au voisinage du fond de la cavité doseuse. La présence du tube plongeur autorise la réalisation d'une cavité doseuse de plus grand volume.

Ledit élément de rétention s'étend de préférence sur une partie de sa hauteur à l'intérieur d'un col formé par le récipient, et dont un bord libre délimite ladite ouverture.

La pompe est de préférence, solidaire d'une frette, montée fixement sur le col du récipient, notamment par encliquetage ou par vissage. Elle peut être surmontée d'un organe, notamment sous forme d'un bouton poussoir, pour actionner ladite pompe.

Le dispositif selon l'invention est particulièrement adapté pour le conditionnement et la distribution d'un produit cosmétique ou de soin, notamment pour la peau ou les cheveux.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 représente une vue d'ensemble d'un dispositif selon un mode de réalisation de l'invention ;
- les figures 2A-2D illustrent diverses vues en coupe et en perspective d'une partie du dispositif de la figure 1 ; et
- les figures 3A-3E illustrent différentes étapes du fonctionnement du dispositif représenté aux figures 1 et 2A-2D.

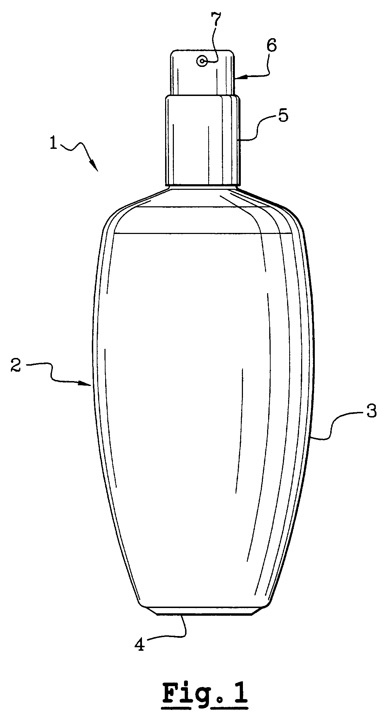

Le dispositif 1 représenté à la figure 1 comprend un récipient 2 présentant un corps 3 dont une extrémité est fermée par un fond 4. Une extrémité opposée au fond présente un col dont un bord libre délimite une ouverture à l'intérieur de laquelle est montée une pompe alimentée depuis un élément de rétention, lesquels feront l'objet d'une description détaillée par la suite. La pompe est fixée au récipient 2, via une frette de montage 5. Un organe d'actionnement sous forme d'un bouton poussoir 6 permet l'actionnement de la pompe et la sortie du produit au travers d'au moins un orifice de sortie 7. Les éléments constitutifs du dispositif, notamment le récipient 2, la pompe, l'élément de rétention, la frette 5, et le bouton poussoir 6, peuvent être obtenus de moulage d'un matériau thermoplastique, notamment un polypropylène ou un polyéthylène.

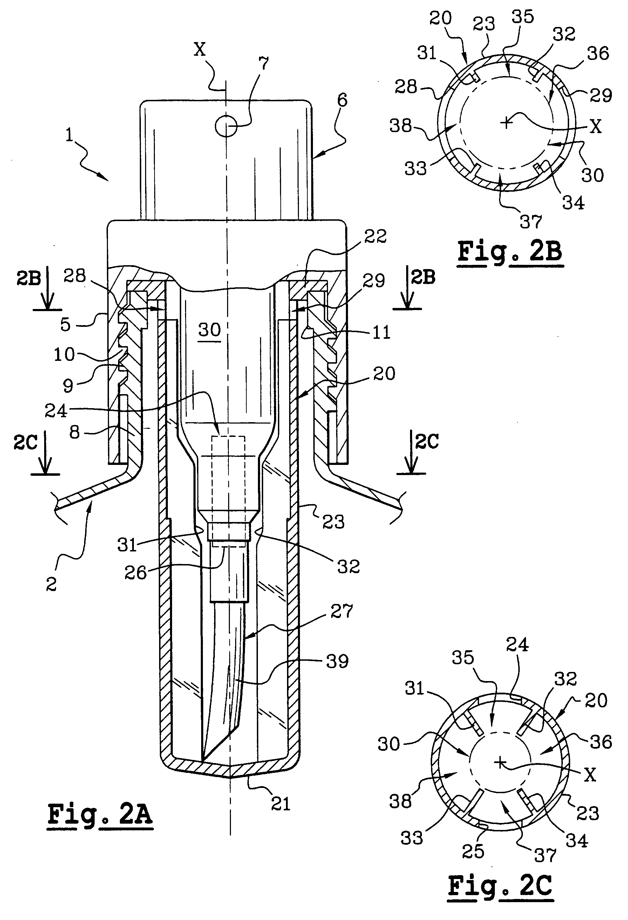

Les figures 2A-2D auxquelles il est maintenant fait référence, illustrent de manière plus détaillée l'élément de rétention, et son système de distribution associé.

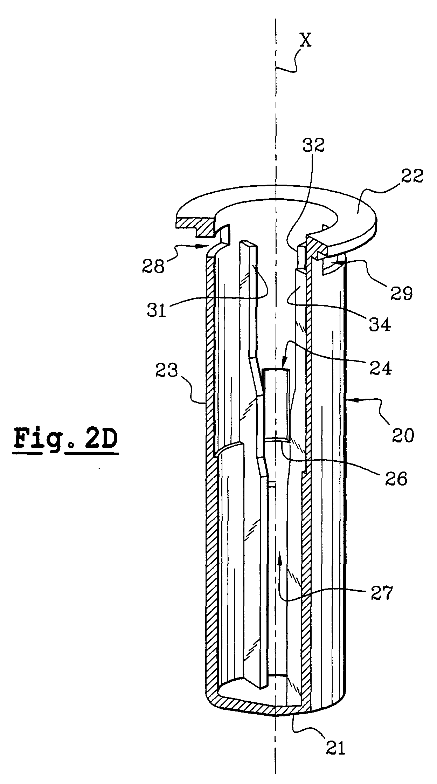

Une extrémité du récipient 1 se termine par un col 8. La surface extérieure du col 8 comprend un filetage 9, apte à coopérer avec un filetage 10 prévu sur la surface intérieur d'une frette de montage 5. Le col 8 du récipient délimite une ouverture 11 à l'intérieur de laquelle est monté un élément de rétention 20. L'élément de rétention 20, tel que représenté à la vue en perspective de la figure 2D, se présente sous forme d'un élément cylindrique, de diamètre extérieur légèrement inférieur au diamètre intérieur du col 8 du flacon 1. Une extrémité de l'élément de rétention 20 est fermée par un fond 21. L'autre extrémité est ouverte et présente un rebord 22 prenant appui sur le bord libre du col 8 du récipient 1.

Dans la paroi latérale 23 de l'élément de rétention, sont ménagés sensiblement à mi-hauteur, deux passages, sous forme de fenêtres 24, 25, diamétralement opposées. Les fenêtres 24 et 25 sont de forme oblongue, et sont orientées longitudinalement à un axe X du dispositif 1. Le bord inférieur 26 des fenêtres 24 et 25 délimite la hauteur de remplissage maximal de la cavité doseuse 27 formée en dessous desdites fenêtres 24, 25. Typiquement, le volume de la cavité doseuse est de l'ordre de quelques ml.

Sensiblement au niveau de l'ouverture 11 du récipient 1, l'élément de rétention forme deux passages sous forme de fenêtres 28, 29, diamétralement opposées, et décalées à 90° par rapport aux fenêtres 24 et 25. Les fenêtres 28 et 29 sont de forme oblongue et sont orientées perpendiculairement à l'axe X du dispositif 1.

Une pompe 30, solidaire de la frette est disposée à l'intérieur de l'élément de rétention 20. Le corps de la pompe 30 présente un profil diminuant par paliers successifs, en direction du fond 21 de la cavité doseuse 27. La pompe est reliée à un tube plongeur 39 dont une extrémité libre se situe au voisinage du fond 21 de la cavité doseuse.

A l'intérieur de l'élément de rétention, sont disposées quatre nervures 31-34 s'étendant axialement, sensiblement depuis les passages 28, 29, jusqu'au fond 21 de la cavité doseuse 27. Les nervures sont orientées radialement et sont de largeur radiale augmentant par paliers en direction du fond 21, de sorte que l'extrémité libre des ailettes vienne sensiblement au contact du corps de la pompe, au moins sur la hauteur comprise entre les passages 28 et 29, et les passages 24, 25. Ainsi, par la coopération des nervures 31-34 et du corps de la pompe 30, sont formés, quatre canaux 35-38, sensiblement fermés sur leur longueur comprise entre les passages 28, 29, et les passages 24, 25, et avec lesquels lesdits canaux 35-38 communiquent au moins deux à deux.

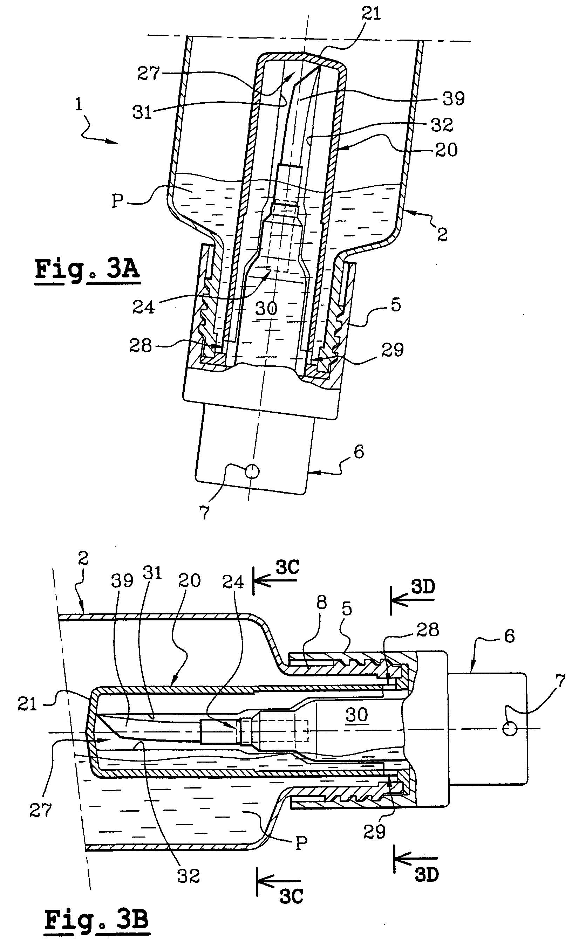

Les figures 3A-3E auxquelles il est maintenant fait référence, illustrent différentes étapes du fonctionnement du dispositif qui vient d'être décrit en référence aux figures 1 et 2A-2D.

A la figure 3A, le dispositif 1 est retourné tête en bas de sorte que le produit P communique avec l'élément de rétention 20, à la fois via les passages 28, 29, et 24, 25.

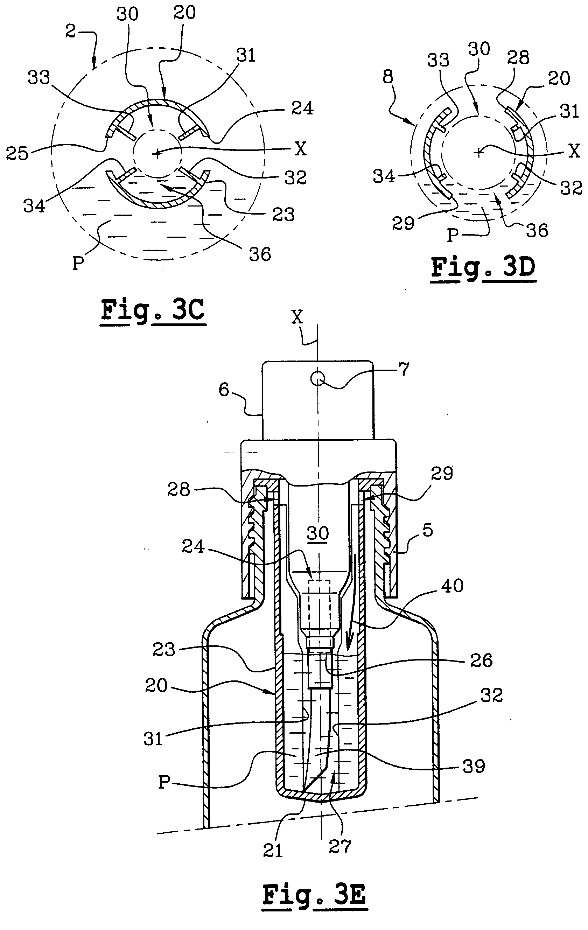

A la figure 3B, le dispositif passe par une position horizontale, sensiblement à mi-chemin entre la position tête en bas de la figure 3A et la position tête en haut de la figure 3E. Le niveau du produit est sensiblement à mi-hauteur du col 8 du récipient 2. Dans cette position, le produit remplit au moins le canal 36 délimité par les nervures 32 et 34 (voir les vues en coupe des figures 3C et 3D).

En continuant le mouvement de retournement, de manière à, comme représenté à la figure 3E, remettre le dispositif sensiblement en position tête en haut, le produit remplit la cavité doseuse 27. Le remplissage de la cavité 27 est complété par l'écoulement dans la cavité doseuse du produit (P) emprisonné en particulier dans le canal 36 délimité par les nervures 32 et 34 et par le corps de la pompe 30. Cet écoulement de produit est matérialisé par la flèche 40. Tout produit en excès dans la cavité doseuse 27 retombe dans le récipient 2 par débordement via les passages 24, 25. La cavité doseuse est ainsi remplie toujours sensiblement de la même manière, et ce quelle que soit les conditions de retournement du récipient de la position tête en bas vers la position tête en haut.

Ensuite, il reste à distribuer le contenu de la cavité doseuse 27 au moyen de la pompe 30, laquelle est actionnée au moyen du bouton poussoir 6, le produit passant dans la pompe 30 via le tube plongeur 39 dont l'extrémité libre se trouve au fond de la cavité doseuse 27.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. Dispositif (1) pour le conditionnement et la distribution dosée d'un produit liquide (P) comprenant un récipient (2) comportant une ouverture (11) dans laquelle est monté un élément de rétention (20) délimitant une cavité doseuse (27) dont le contenu est destiné à être distribué en position tête en haut du dispositif, au moyen d'une pompe (30) équipant le dispositif, ledit élément de rétention (20) comprenant ou délimitant au moins un premier passage (24, 25) dont la position axiale délimite le volume maximal de la cavité doseuse (27), et au moins un second passage (28, 29) disposé à une hauteur axiale intermédiaire entre l'ouverture (11) du récipient et le (ou les) premier(s) passage(s) (24, 25), lesdits premier et second passages étant destinés à être mis en communication avec le produit (P) par retournement au moins partiel du récipient (2), des moyens (30, 31-38) étant prévus pour lors du passage du dispositif (1) depuis la position retournée vers la position de distribution, canaliser tout ou partie du produit (P entrant dans ledit élément de rétention (20) via le (ou les)-second(s) passage(s) (28, 29), vers ladite cavité doseuse (27).

2. Dispositif (1) selon la revendication 1 **caractérisé en ce que** lesdits moyens de canalisation (30, 31-38) délimitent au moins en partie au moins un canal longitudinal (35-38), sensiblement fermé au moins sur sa longueur comprise entre le (ou les) second(s) passage(s) (28, 29) et la cavité doseuse (27).

3. Dispositif (1) selon la revendication 2 **caractérisé en ce que** la fermeture ou quasi fermeture longitudinale du (ou des) canal (canaux) (35-38) résulte de la coopération de ladite pompe (30) avec lesdits moyens de canalisation (31-34).

4. Dispositif (1) selon l'une quelconque des revendications 1 à 3 **caractérisé en ce que** ledit (ou lesdits) second(s) passage(s) (28, 29) est (sont) sensiblement au niveau de ladite ouverture (11) du récipient (1).

5. Dispositif (1) selon l'une quelconque des revendications 1 à 4 **caractérisé en ce que** ledit élément de rétention (207) est constitué d'un élément tubulaire (23) dont un fond (21) est fermé et dont une extrémité ouverte (22) est montée sur un bord du récipient délimitant ladite ouverture (11).

6. Dispositif (1) selon l'une quelconque des revendications 1 à 5 **caractérisé en ce que** ledit (ou lesdits) premier(s) passage(s) (24, 25) est (sont) à position angulaire distincte de la position angulaire dudit (ou desdits) second(s) passage(s) (28, 29).

7. Dispositif (1) selon les revendications 5 et 6 **caractérisé en ce que** l'élément de rétention (20) délimite deux premier passages (24, 25) disposés à l'opposé l'un de l'autre, et deux second passages (28, 29) disposés à l'opposé l'un de l'autre, et décalés à 90° par rapport auxdits premier passages (24, 25).

8. Dispositif (1) selon l'une quelconque des revendications 1 à 7 **caractérisé en ce que** lesdits moyens de canalisation sont constitués d'au moins une nervure (31-34) formée sur une surface intérieure de l'élément de rétention (20), et s'étendant axialement sensiblement depuis le (ou les) second(s) passage(s) (28, 29), au moins jusqu'à la cavité doseuse (27).

9. Dispositif (1) selon la revendication 8 **caractérisé en ce que** ladite (lesdites) nervure(s) (31-34) s'étendent sensiblement jusqu'au fond (21) de la cavité doseuse (27).

10. Dispositif (1) selon l'une quelconque des revendications qui précèdent **caractérisé en ce qu'**il comprend au moins deux nervures (31-34), configurées de manière à délimiter avec la pompe (30) au moins un canal (35-38) sensiblement fermé sur sa longueur, au moins entre le (ou les) second(s) passage(s) (28, 29) avec chacun desquels l'un au moins des canaux (35-38) communique et la cavité doseuse (27) dans laquelle il (ils) débouche(nt).

11. Dispositif (1) selon l'une quelconque des revendications 8 à 10 **caractérisé en ce que** ledit élément de rétention (20) est de forme cylindrique de révolution, ladite (lesdites) nervure(s) (31-34) étant orientées radialement audit élément de rétention (20).

12. Dispositif (1) selon les revendications 10 et 11 **caractérisé en ce que** lesdites nervures (31-34) sont de largeur radiale variable de manière à suivre sensiblement le profil de la pompe (30) sur sa hauteur comprise entre le (ou les) second(s) passage(s) (28, 29) et ladite cavité doseuse (27).

13. Dispositif (1) selon l'une quelconque des revendications qui précèdent **caractérisé en ce que** la pompe (30) est solidaire d'un tube plongeur (39) dont une extrémité est située sensiblement au voisinage du fond (21) de la cavité doseuse (27).

14. Dispositif (1) selon l'une quelconque des revendications 1 à 13 **caractérisé en ce que** ledit élément de rétention (20) s'étend sur une partie de sa hauteur à l'intérieur d'un col (8) formé par le récipient (2), et dont un bord libre délimite ladite ouverture (11).

15. Dispositif (1) selon la revendication 14 **caractérisé en ce que** la pompe est solidaire d'une frette (5), montée fixement sur le col (8) du récipient, notamment par encliquetage ou par vissage.

16. Dispositif (1) selon l'une quelconque des revendications qui précèdent **caractérisé en ce que** ladite pompe (30) est surmontée d'un organe, notamment sous forme d'un bouton poussoir (6), pour actionner ladite pompe.

17. Utilisation d'un dispositif (1) selon l'une quelconque des revendications qui précèdent pour le conditionnement et la distribution d'un produit cosmétique ou de soin (P), notamment pour la peau ou les cheveux.
